# EUROPEAN PATENT APPLICATION

(11) **EP 4 734 314 A1**
(43) Date of publication of application: **29.04.2026**
(21) Application number: 25200624.2
(22) Date of filing: 05.09.2025
(51) Int. Cl.: H02J 3/00, G06Q 50/06, H02J 13/10, H02J 13/12, H02J 13/13, H02J 13/14, H02J 13/18, H02J 13/181, H02J 13/182, H02J 13/333, H02J 13/34

(54) **EVALUATION DEVICE AND EVALUATION METHOD FOR POWER GRID FACILITY**

(30) Priority: 25.10.2024 JP 2024187833
(71) Applicant: Hitachi, Ltd., Tokyo 100-8280 (JP)
(72) Inventor: SUENAGA, Shinya, Tokyo, 1008280 (JP); KIM, Sungho, Tokyo, 1008280 (JP); WATANABE, Daichi, Tokyo, 1008280 (JP); FUNAYA, Yusuke, Tokyo, 1008280 (JP); TADA, Yasuyuki, Tokyo, 1008280 (JP); KATAYAMA, Shigeki, Tokyo, 1008280 (JP)
(74) Representative: Mewburn Ellis LLP

(57) **Abstract**

An object is to provide a technique that makes it possible to verify whether or not a configuration of an information system of an edge device or the like has a sufficient performance level that withstands long-term status changes and to generate a plan for an information system configuration capable of maintaining reliability. An evaluation device of the present invention includes: a power system evaluation unit that evaluates a power grid as a power system for adjusting a flow of electric power; an information system evaluation unit that evaluates the power grid as an information system for performing information processing and communication; a processing condition determination unit that formulates a plan for utilizing the power grid and utilizing a processing module, on a basis of a prediction about a change in the power grid during an evaluation period; an evaluation determination unit that calculates a performance index indicating a performance as the power system and a performance as the information system corresponding to a situation where the plan for the evaluation period is applied; and a configuration evaluation unit that sets an information system configuration of which the performance index during the evaluation period satisfies a performance requirement, as a system proposal capable of executing the plan.

## Description

### Technical Field

The present invention relates to an evaluation device and an evaluation method for a power grid facility.

### Background Art

Conventionally, an entirety of facilities (which hereinafter may be referred to as a "power grid") is known in which electric power is handled from production to consumption by a power generation facility, a power transmission facility, a substation facility, a power distribution facility, and a consumer facility. In such a power grid, to maintain a high-quality power supply, operations are carried out by a collaboration between a superordinate system such as a central control center in charge of a coordinated operation in a large area and a subordinate system in charge of monitoring and controlling devices at a substation and the like. By using the above systems, those who utilize the power grid realize maintaining quality of the power in a long term and a short term as well as an efficient utilization, even when an accident has occurred, for example.

At the substation, states of a group of facilities thereof are monitored, while a breaker is manipulated to open and close or the like. In addition, in the event of a failure or an anomaly of a facility in the power grid, a protecting function to maintain reliability of the power is provided, by isolating an anomaly section from the power grid so as to prevent the accident from spreading. Examples thereof include a protection relay that, when a facility has a current or voltage in excess, isolates the facility.

In recent years, an international standard (IEC 61850) has been prepared regarding data transmissions for substation facilities as described above. When a control system of a power grid is to be constructed, a facility compliant with the standard, which is called an Intelligent Electronic Device (IED), is adopted. An IED is capable of carrying out a data transmission by using a generic communication standard. Thus, a control system at each substation is able to use a generic computer besides a dedicated incorporated apparatus. It is therefore possible to flexibly construct the control system.

Known examples of social infrastructure using a data transmission include, in addition to the power grid, a data center structured with a computer, for example. Regarding such a data center, for example, Japanese Patent Laid-Open Publication No. 2014-006756 (Patent Document 1) discloses a technique for generating an information system placement pattern and presenting a cost, in accordance with an increase in a demand pattern of processes. More specifically, Patent Document 1 discloses the following as an invention of a utilization plan development assistance system and a method for achieving the goal of strategically expanding infrastructure facilities, in order to efficiently provide apparatuses, the infrastructure facilities in the data center, and a virtualized environment, in accordance with a usage request from a new user, at the time of formulating a utilization plan for the data center.

"At a utilization plan development assistance server (101) that assists formulation of a utilization plan for a data center, a future demand (increase) pattern is generated by classifying a past demand history (110); a system placement pattern in the data center corresponding to the demand pattern is also generated (112); it is determined whether the placement pattern satisfies a condition required by the user and a constraint condition of the data center, and if there is an insufficiency, a condition improvement value is generated (114); and a time period and a cost required by expanding infrastructure facilities at the data center based on the demand pattern are presented".

### Summary of Invention

### Technical Problem

For IEDs, modularizing processes by using virtualization technology has been proposed. Accordingly, configuring a system by using a generic computer and modifying a system configuration with an external process are also being discussed. However, when virtualization technology is applied to a power grid facility, it is difficult to evaluate an appropriate level for a system configuration.

According to the technique disclosed in Patent Document 1, as a configuration plan for the data center, a configuration plan is formulated on the basis of the pattern of the increase in the processes. However, for a control system of a power grid, because a performance change caused by a configuration modification at substations dispersed in a region will impact the entire power grid, it would be difficult to simply apply thereto the technique disclosed in Patent Document 1.

In addition, for a power grid, it is necessary to accurately modify processes and setting values of IEDs, in order to address introduction of many renewable energy power sources, which is greatly dependent on weather conditions, as well as status changes outside the power grid such as occurrence of a major disaster. In those situations also, it would also be difficult to judge what level of performance is required from a control system at each substation. For this reason, there have been situations in which a constraint in the performance of the control system causes degradation of reliability or, on the contrary, a processing capability higher than necessary is provided.

The present invention was made in view of the circumstances described above. An object is to provide a technique that makes it possible to verify whether or not a configuration of an information system of an edge device or the like has a sufficient performance level that withstands long-term status changes and to generate a plan for an information system configuration capable of maintaining reliability.

### Solution to Problem

To solve the above problems, a typical example of an evaluation device of the present invention is an evaluation device for evaluating a power grid facility being a facility included in a power grid, the evaluation device including: a processor; a memory; and a recording unit that stores therein at least grid state data. Further, the power grid includes an electric device and an edge device which controls the electric device and has a processing module that is modifiable. The evaluation device is connectable to the edge device. Furthermore, the memory includes a processing instruction that causes the processor to run as: a power system evaluation unit that evaluates the power grid as a power system for adjusting a flow of electric power; an information system evaluation unit that evaluates the power grid as an information system for performing information processing and communication; a processing condition determination unit that formulates a plan for utilizing the power grid and utilizing the processing module, on a basis of a prediction about a change in the power grid during an evaluation period; an evaluation determination unit that calculates a performance index indicating a performance as the power system and a performance as the information system corresponding to a situation where the plan for the evaluation period is applied; and a configuration evaluation unit that sets an information system configuration of which the performance index during the evaluation period satisfies a performance requirement, as a system proposal capable of executing the plan.

### Advantageous Effect of Invention

According to an example of the present invention, it is possible to verify whether or not the configuration of the information system of the edge device or the like has a sufficient performance level that withstands long-term status changes and to generate the plan for the information system configuration capable of maintaining reliability.

Other problems, configurations, and advantageous effects besides the above will become apparent from the following explanations of the embodiments.

### Brief Description of Drawings

FIG. 1 is a diagram showing an exemplary configuration of an evaluation device;
FIG. 2 is a diagram showing an exemplary configurations of a power grid control device and a control system;
FIG. 3 is a drawing showing an example of environment state data;
FIG. 4 is a drawing showing an example of apparatus setting data;
FIG. 5 is a drawing showing an example of apparatus state data;
FIG. 6 is a drawing showing an example of grid apparatus configuration data;
FIG. 7 is a drawing showing an example of information system configuration data;
FIG. 8 is a drawing showing an example of processing condition data;
FIG. 9 is a drawing showing an example of processing configuration data;
FIG. 10 is a drawing showing an example of processing evaluation data;
FIG. 11 is a drawing showing an example of a flowchart for evaluating an information system configuration of a power grid edge device;
FIG. 12 is a drawing showing an example of information system modification candidate data;
FIG. 13 is a drawing showing an example of information system modification proposal data;
FIG. 14 is a drawing showing an example of a flowchart for generating and evaluating an information system configuration;
FIG. 15 is a drawing showing an example of a display screen for processing conditions;
FIG. 16 is a drawing showing an example of a display screen for processing configurations;
FIG. 17 is a drawing showing an example of a display screen for processing evaluations;
FIG. 18 is a drawing showing an example of a display screen for information system modification candidates; and
FIG. 19 is a drawing showing an example of a display screen for information system modification proposals.

### Description of Embodiments

The following will describe an embodiment of the present invention in detail, with reference to the drawings. The present invention is not limited by the embodiment. Further, in the depiction of the drawings, some of the parts that are the same as each other are referred to by using the same reference characters.

### (A configuration of an evaluation device)

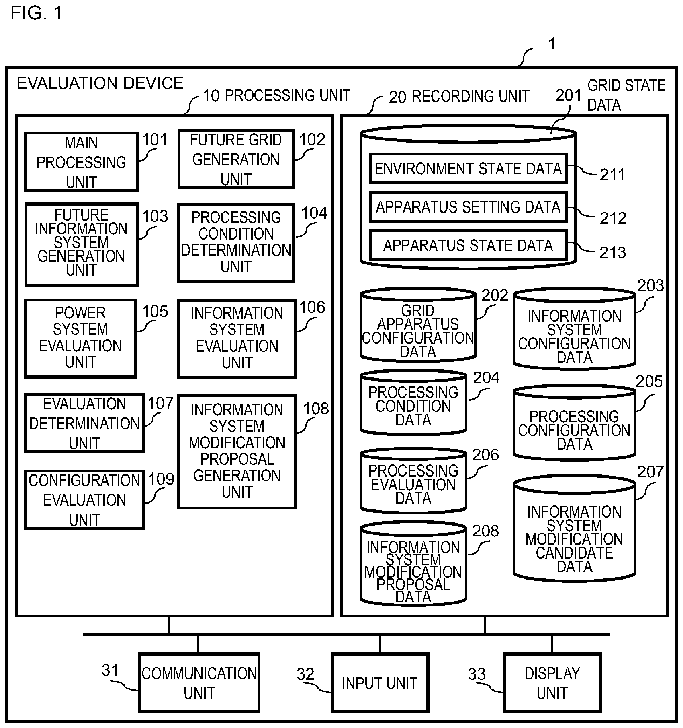

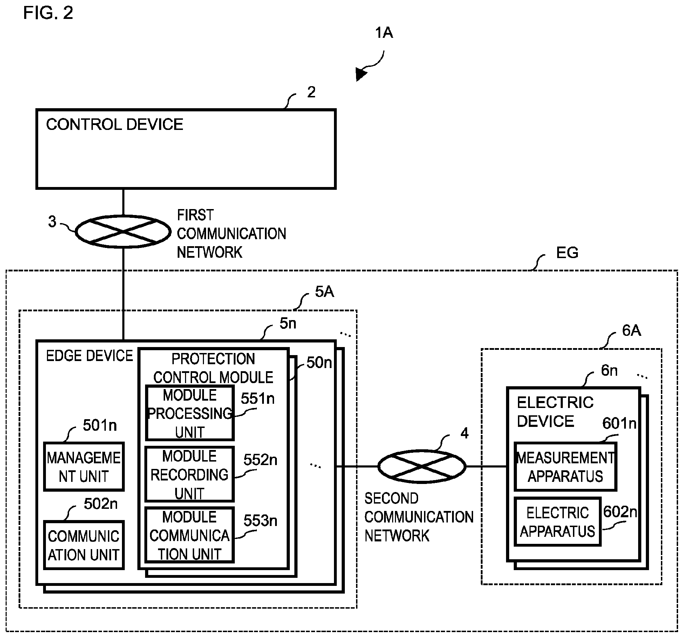

FIG. 1 shows a power grid facility evaluation device (which hereinafter may simply be referred to as an "evaluation device") 1 according to the present embodiment. FIG. 1 is a drawing showing an exemplary configuration of the evaluation device 1. The evaluation device 1 is an evaluation device for a power grid facility (which will be explained later with reference to FIG. 2) and includes a processor, a memory, and a recording unit 20 that stores therein at least grid state data 201. The memory includes a processing instruction that causes the processor to run as: a main processing unit 101, a future grid generation unit 102, a future information system generation unit 103, a processing condition determination unit 104, a power system evaluation unit 105, an information system evaluation unit 106, an evaluation determination unit 107, an information system modification proposal generation unit 108, and a configuration evaluation unit 109, which will be explained later. The following will provide more specific explanations.

Regarding a control system of a power grid (e.g., a power transmission system), the evaluation device 1 evaluates the control system as a power system (an electric circuit) and evaluates the control system as an information system. The evaluation device 1 is configured so as to include: a Central Processing Unit (CPU), a controller (a processing device or a processor) such as a microprocessor, the memory, storage devices such as a hard disk and a Solid State Drive (SSD), a communication device, an input device, and an output device. The evaluation device 1 may be realized in the form of a circuit, a printed circuit board, a server, an information processing device, or the like, for example.

The evaluation device 1 includes: a processing unit 10 that performs various types of processes; the recording unit 20 that records (stores) therein various types of information; a communication unit 31 that communicates with an external device that is not shown in FIG. 1; an input unit 32 that receives inputs of various types of information; and a display unit 33 that outputs various types of information.

The processing unit 10 includes the main processing unit 101, the future grid generation unit 102, the future information system generation unit 103, the processing condition determination unit 104, the power system evaluation unit 105, the information system evaluation unit 106, the evaluation determination unit 107, the information system modification proposal generation unit 108, and the configuration evaluation unit 109. Functions of the processing unit 10 will be explained later.

The recording unit 20 includes: grid state data 201, grid apparatus configuration data 202, information system configuration data 203, processing condition data 204, processing configuration data 205, processing evaluation data 206, information system modification candidate data 207, and information system modification proposal data 208. The grid state data 201 includes environment state data 211, apparatus setting data 212, and apparatus state data 213. Details of the data included in the recording unit 20 will be explained later.

In the present disclosure, an example will be explained in which the processing unit 10 is structured with a CPU and a controller; however, the present disclosure is not limited to this example. For instance, the processing unit 10 may be specified by using software represented by an assembly of various types of programs stored in a storage device and processed by the controller or may be specified by using hardware such as a circuit. Besides the processing unit 10, each of the constituent elements (explained later) of the evaluation device 1 does not necessarily need to be realized with a single device and may be realized with a plurality of devices connected to be able to communicate with each other.

Further, the recording unit 20 may be specified by using a storage device, for example. The communication unit 31 may be specified by using a communication device, for example. The input unit 32 includes at least one of input devices such as, for example, a pointing device like a keyboard, a mouse, or the like, a touch panel, and a sound instruction device. The display unit 33 includes at least one of output devices such as a display device, a printer, and a sound output device. Further, none of the constituent elements of the evaluation device 1 is limited to being hardware. Any of the functions thereof may be configured by using a cloud service, for example.

### (A configuration of the control system)

FIG. 2 is a diagram showing an exemplary configurations of a power grid control device and a control system. FIG. 2 shows a control system 1A to be calculated (evaluated) by the evaluation device 1. The control system 1A includes a power grid control device (hereinafter, simply "control device") 2, a power grid edge device group (hereinafter, simply "edge device group") 5A, and a power grid electric device group (hereinafter, simply "electric device group") 6A. The control device 2 and the edge device group 5A are communicably connected together via a first communication network 3. The edge device group 5A and the electric device group 6A are communicably connected together via a second communication network 4. A power grid EG is structured with the edge device group 5A and the electric device group 6A.

In this situation, the edge device group 5A includes a plurality of power grid edge devices (hereinafter, simply "edge devices") 5n (where n is an integer of 1 or larger). The electric device group 6A includes a plurality of power grid electric devices (hereinafter, simply "electric devices") 6n. The edge devices 5n and the electric devices 6n are communicably connected together via the second communication network 4. Further, each of the edge devices 5n includes a management unit 501n, a communication unit 502n, and a protection control module 50n (which includes a module processing unit 551n, a module recording unit 552n, and a module communication unit 553n). Each of the electric devices 6n includes a measurement apparatus 601n and an electric apparatus 602n. In this situation, the quantity of the protection control modules 50n included in each of the edge devices 5n does not necessarily need to be one and may be two or more depending on the corresponding electric device 6n. In the following explanations, the index n may be omitted when the elements do not need to be particularly distinguished. Thus, for example, the power grid EG may be described as including the electric devices 6 and the edge devices 5 which control the electric devices 6 and have processing modules (the protection control module 50) that are modifiable. Further, the first communication network 3 and the second communication network 4 each do not necessarily need to be a single communication network and may each include a plurality of communication networks.

The evaluation device 1 may be included in the control device 2 or may be connected to the control device 2 via the first communication network 3 or another communication network. The evaluation device 1 evaluates power grid facilities (the electric devices 6 and the edge devices 5), which are the facilities included in the power grid EG. As explained later, the evaluation device 1 is connectable to the edge devices 5.

The control device 2 controls the power grid EG. More specifically, by using measurement data from measurement apparatuses 601 provided by the electric devices 6 via the edge devices 5 and information system state data provided by the edge devices 5 and indicating a state of the control system 1A as an information system, the control device 2 understands, regarding the power grid EG, an electric state (a state as a power system) and a usage status of an information system (a state as an information system). Upon detection of a change determined by a user, the control device 2 evaluates and calculates, regarding the power grid EG, an electric state (a viewpoint as a power system) and a viewpoint as an information system corresponding to the situation where the protection control module of an edge device 5 corresponding to the change is selected and modified. When an evaluation as the power system and an evaluation as the information system that were calculated regarding the power grid EG satisfy evaluation values determined in advance, the control device 2 is able to transmit the selected protection control module 50 to the edge device 5 so as to have the module executed.

Each of the edge devices 5 includes the management unit 501 that manages the configuration of the protection control module 50; the communication unit 502 that communicates with the control device 2 via the first communication network 3; and the protection control module 50 that performs a protection control process for the electric device 6. Each of the edge devices 5 is able to hold one or more protection control modules in which functions are grouped together with respect to details of each specific process such as obtaining or processing measurement data or manipulating or modifying settings of the electric device 6. From among the protection control modules 50 held by the management unit 501, one or more protection control modules that will actually execute the process are selected. Each of the edge devices 5 is configured so that the protection control module 50 is modifiable by using a publicly-known technique such as a virtual machine or a container. Each of the edge devices 5 may be configured so that the protection control module 50 is modifiable by using other methods. Further, via the first communication network 3, each of the edge devices 5 is able to provide the control device 2 with information indicating an operation state as the information system related to a computation amount of the protection control module 50 and a communication amount of the second communication network 4.

Each of the protection control modules 50 includes the module processing unit 551 that protects the electric device 6 and executes a control process on operations of the electric device 6; the module recording unit 552 that records details of processes; and the module communication unit 553 that communicates with the electric device 6 via the second communication network 4. A specific operation example of the protection control module 50 will be explained. The module processing unit 551 obtains the measurement data from the measurement apparatus 601 (explained later) via the second communication network 4 connected to the module communication unit 553 and records the obtained measurement data into the module recording unit 552. The module processing unit 551 determines details of a manipulation performed on the electric apparatus 602 by using the measurement data in the module recording unit 552 and other setting data. The module communication unit 553 transmits the determined manipulation details to the electric apparatus 602 (explained later) via the second communication network 4 so that a setting of the electric apparatus 602 is modified. The above merely describes an example. The process performed by the protection control module 50 may be any of various processes to improve the protection control of the power grid EG which combine together information transmission/reception to and from the control device 2 via the communication unit 502, storing the measurement data from the measurement apparatus 601, manipulating the electric apparatus 602, and other useful processes. Although the example was explained in which each of the edge devices 5 includes one protection control module 50, the present disclosure is not limited to this example. Each of the edge devices 5 may include a plurality of protection control modules having mutually-different functions. In that situation, for example, the management unit 501 is able to select a protection control module suitable for a process on the electric device 6.

In the present disclosure, an example will be explained in which the management unit 501 and the module processing unit 551 are structured with a CPU and a controller; however, the present disclosure is not limited to this example. For instance, the management unit 501 and the module processing unit 551 may be specified by using software represented by an assembly of various types of programs stored in a storage device and processed by the controller or may be specified by using hardware such as a circuit. Further, each of these units does not necessarily need to be realized with a single device and may be realized with a plurality of devices connected to be able to communicate with each other.

Also, the module recording unit 552 may be specified by using a storage device, for example. The communication unit 502 and the module communication unit 553 may each be specified by using a communication device, for example.

For example, each of the electric devices 6 corresponds to a power generation facility (e.g., a power plant) that generates power by using a power generation device, a consumer facility that consumes the power generated by the power generation facility, a power dispensing facility (a power transmission facility, a substation facility, a power distribution facility, or the like) that transmits the power from the power generation facility to the consumer facility, or a protection control facility such as a protection relay used for protecting and appropriately controlling a facility. Each of the electric devices 6 includes the electric apparatus 602 that structures the facility and the measurement apparatus 601 that measures a state of the facility or a state of a peripheral environment. In an example in which an electric device 6 is a power generation device, the power generation device may be a device that carries out thermal power generation, hydroelectric power generation, nuclear power generation, geothermal power generation, solar power generation, wind power generation, or the like or may be a device that generates power by implementing other various power generation methods. In another example in which an electric device 6 is a power dispensing facility, examples of the power dispensing facility include an overhead power transmission line, an underground power transmission line, a transformer, a breaker, a switch, a phase modulation facility, and a busbar. Other examples may include various facilities related to transmitting and distributing power. The power grid EG is structured by integrating any of the above.

The measurement apparatus 601 measures a state at a specific measurement point of the power grid EG. Various items may be adopted as measurement items, depending on the type of the electric device 6. Examples of the items may include: power items such as voltage, a phase, and power; weather items such as a temperature, a wind speed, a wind direction, precipitation, and solar radiation; items related to a setting state and an operation state of the electric apparatus 602; and items related to an operation state of an apparatus that changes a power load-flow state of the power dispensing facility, the power generation device, or the like. Further, the measurement items may include other various items besides the items listed above. The measurement point may be, for example, a busbar of the power generation facility, a busbar of the substation facility, a power dispensing facility, a consumer facility, or the like. The quantity of the measurement apparatus 601 does not necessarily need to be one. For example, a plurality of measurement apparatuses may be set with a single measurement point. A value measured by the measurement apparatus 601 is transmitted to the edge device 5 via the second communication network 4. In addition, the value may further be transmitted to the control device 2 via the first communication network 3.

### (An evaluation of the power grid)

### (Data generation by the future grid generation unit)

Data generation by the future grid generation unit 102 will be explained, with reference back to FIG. 1. The future grid generation unit 102 either generates or saves the grid state data 201, the grid apparatus configuration data 202, and the information system configuration data 203. These data include information corresponding to a future point in time (which hereinafter may be referred to as a "future time"), in addition to data from a past point in time to a current point in time. As the method for generating the future time data, any of various types of methods may be implemented. For example, the future grid generation unit 102 may generate data corresponding to a future time according to an input from the user via the input unit 32 and record the generated data as the grid state data 201, the grid apparatus configuration data 202, and the information system configuration data 203. As another example, the future grid generation unit 102 may obtain data including a future time from an external server (not shown) via the communication unit 31 and record the obtained data as the grid state data 201, the grid apparatus configuration data 202, and the information system configuration data 203. In addition, information at a future time may be estimated by using data from a past time in the grid state data 201, the grid apparatus configuration data 202, and the information system configuration data 203. For example, simply, an average value of data from the same date/time in past years may be used as an estimated value. Alternatively, a more precise estimated value may be calculated by using machine learning based on a publicly-known technique. A user may set the precision level of the data. Known examples of the machine learning include a demand prediction based on learning weather data and demand data.

### (Specific examples of the data)

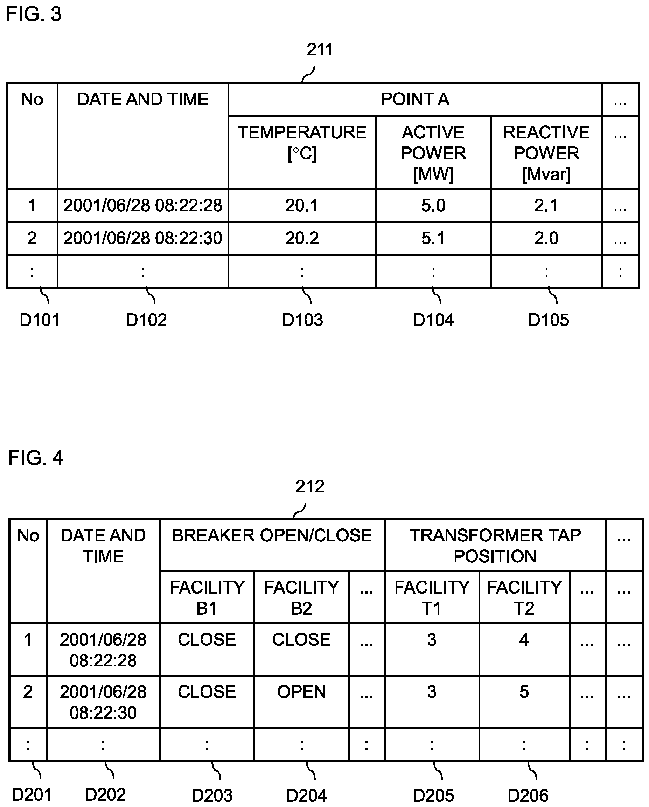

Next, with reference to FIG. 3 to FIG. 10, the following will explain specific examples of the grid state data 201 (the environment state data 211, the apparatus setting data 212, and the apparatus state data 213), the grid apparatus configuration data 202, the information system configuration data 203, the processing condition data 204, the processing configuration data 205, and the processing evaluation data 206. These data are data to be evaluated by the evaluation device 1. Further, among these data, the grid apparatus configuration data 202, the information system configuration data 203, and the processing condition data 204 may, similarly to the grid state data 201, also include information corresponding to a future time, in addition to data of a duration from a past point in time to a current point in time. Furthermore, the data up to a current point in time may be shared with the control device 2.

FIG. 3 is a drawing showing an example of the environment state data 211. The environment state data 211 includes: information about the items measured by the measurement apparatus 601; power information about active power and reactive power flowing in the electric apparatus 602, voltage, phase, and the like; and weather information about a temperature, a wind speed, and the like. FIG. 3 shows an example of the environment state data 211 at a point A. For example, the environment state data 211 includes information related to items such as a serial number D101, a date/time D102, a temperature D103, active power D104, and reactive power D105. The values of the items at the specific point are recorded together with the date/time as the environment state data 211. In a specific example, the information included in the environment state data 211 may indicate that, at the point A, the temperature is 20.1°C; the active power is 5.0 MV; and the reactive power is 2.1 Mvar, at the time 08:22:28 on the date 2001/06/28. In this situation, D102 to D105 are examples of the items structuring the data and may be modified as appropriate, in accordance with a modification on details of the measurement by the measurement apparatus 601 or in the electric apparatus 602.

FIG. 4 is a drawing showing an example of the apparatus setting data 212. The apparatus setting data 212 includes information about setting states of the electric apparatuses 602. For example, the apparatus setting data 212 includes information related to items such as a serial number D201, a date/time D202, an open/close state of a breaker B1 D203, an open/close state of a breaker B2 D204, a tap position of a transformer T1 D205 and a tap position of a transformer T2 D206. The information (setting values) indicating settings of the electric apparatuses 602 is recorded together with the date/time as the apparatus setting data 212. In a specific example, the information included in the apparatus setting data 212 may indicate that the breaker B1 and the breaker B2 are both in a closed state; the tap position of the transformer T1 is 3; and the tap position of the transformer T2 is 4, at the time 08:22:28 on the date 2001/06/28. Further, although the example was explained in which the electric apparatuses 602 include the breakers B1 and B2 and the transformers T1 and T2, the electric apparatuses 602 may be facilities other than the breakers B1 and B2 and the transformers T1 and T2. Further, D203 to D206 are items related to the settings of the electric apparatuses 602 and may be modified, as appropriate, to be a combination of items that can be set in the electric apparatuses 602.

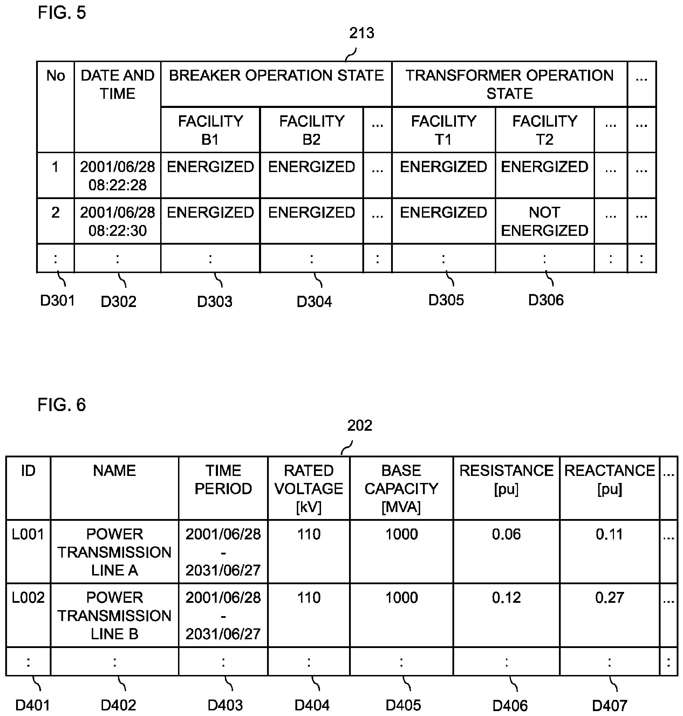

FIG. 5 is a drawing showing an example of the apparatus state data 213. The apparatus state data 213 includes information indicating an operation state (operation state information) of the electric apparatus 602, as information that changes a power load-flow state of the power dispensing facility or the power generation device among the electric apparatuses 602. FIG. 5 shows an example of the apparatus state data 213 of the electric apparatuses 602. For example, the apparatus state data 213 includes information related to items such as a serial number D301, a measurement date/time D302, an operation state of the breaker B1 D303, an operation state of the breaker B2 D304, an operation state of the transformer T1 D305, and an operation state of the transformer T2 D306. The operation state information of these electric apparatuses 602 is recorded together with the date/time as the apparatus state data 213. In a specific example, the information included in the apparatus state data 213 may indicate that the breaker B1 and the breaker B2 are each in an energized state; and the transformer T1 and the transformer T2 are each in an energized state, at the time 08:22:28 on the date 2001/06/28. Besides the items indicated as D303 to D306, the apparatus state data 213 may include an item such as a power transmission status of a power transmission line, depending on the type of the electric apparatus 602. Further, the items in the apparatus state data 213 may be a combination of an item related to an operation state of an electric apparatus 602 that changes a power load-flow state of the power dispensing facility, the power generation device, or the like; and an item related to an operation state of another electric apparatus 602 obtained from the measurement apparatus 601.

FIG. 6 is a drawing showing an example of the grid apparatus configuration data 202. The grid apparatus configuration data 202 includes information related to an electric circuitry aspect of the measurement apparatuses 601 and the electric apparatuses 602 structuring the power grid EG. FIG. 6 shows an example of the grid apparatus configuration data 202 using a power transmission line of the power grid EG as an example. The grid apparatus configuration data 202 includes, for example, information related to items such as an identification (ID) D401, a name D402, a time period D403, rated voltage D404, a base capacity D405, resistance D406, and reactance D407 and is recorded as separate information corresponding to each apparatus. The time period D403 indicates a time period in which the apparatus is present in the same state and, if shorter than an evaluation period, it means that the apparatus is to be modified because a new installation, an update, a discontinuation, or the like is planned. The grid apparatus configuration data 202 includes information necessary for an analysis from an electric circuitry viewpoint of the power grid EG and includes, more specifically, information indicating utilization conditions such as an electric characteristic, a power transmission capacity, a voltage range, and the like related to the electric apparatus 602, an electric connection mode among electric apparatuses 602, and a protection control function such as an overload protection. Further, information about a measuring process by a sensor or the like in the power grid EG may be included. Information about what is measured by the measurement apparatus 601 and a measurement condition thereof, as well as an electric connection mode of the measurement apparatus 601 may be included. In a specific example, the information included in the grid apparatus configuration data 202 may indicate that, regarding a power transmission line A, the rated voltage is 110 kV; the base capacity is 1000 MVA; the resistance is 0.06 pu; and the reactance is 0.11 pu, in the time period from 2001/06/28 to 2031/06/27. FIG. 6 indicates the example of the power transmission line; however, for other electric apparatuses 602 or the measurement apparatuses 601, different items may be provided.

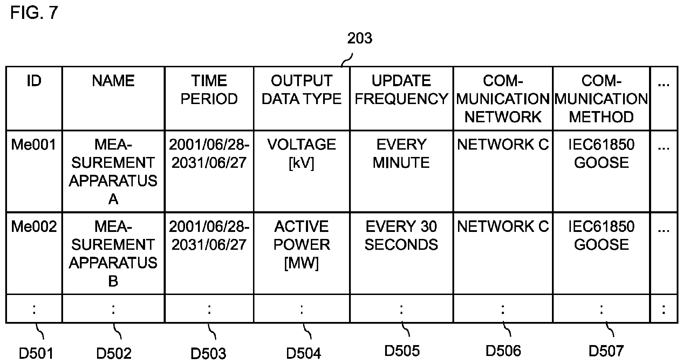

FIG. 7 is a drawing showing an example of the information system configuration data 203. The information system configuration data 203 includes information related to an information system aspect regarding the edge devices 5 that execute the protection control modules 50 and the electric devices 6 structuring the power grid EG. FIG. 7 shows an example of the information system configuration data 203 corresponding to an example with the measurement apparatus 601. For example, the information system configuration data 203 includes information related to items such as an ID (D501), a name D502, a time period D503, an output data type D504, update frequency D505, a communication network D506, and a communication method D507 and is recorded as information system configuration data 203 for each measurement apparatus 601. The time period D503 indicates a time period in which the measurement apparatus 601 is present in the same state and, if shorter than an evaluation period, it means that the apparatus is to be modified because a new installation, an update, a discontinuation, or the like is planned. The information system configuration data 203 includes information necessary for an analysis pertinent to the information system of the power grid EG. For example, the information system configuration data 203 includes: a measurement item and communication-related information such as the type and the frequency of communication data, a communication connection destination, and a communication capacity of a measurement apparatus 601; a processing item and communication-related information such as the type and the frequency of communication data, a communication connection destination, and a communication capacity of an electric apparatus 602; and information about a configuration related to the information system (which hereinafter may be referred to as an "information system configuration") of the power grid EG such as a computation capability, a storage capacity, and a communication capacity of an edge device 5. In a specific example, the information included in the information system configuration data 203 may indicate that, with respect to the measurement apparatus A, the output data type is voltage [kV]; the update frequency is every minute; the communication network is a network C; and the communication method is IEC 61850 GOOSE, in the time period from 2001/06/28 to 2031/06/27. FIG. 7 indicates the example with the measurement apparatuses 601 being electric; however, for other types of measurement apparatuses 601 or the electric apparatuses 602, different items may be provided.

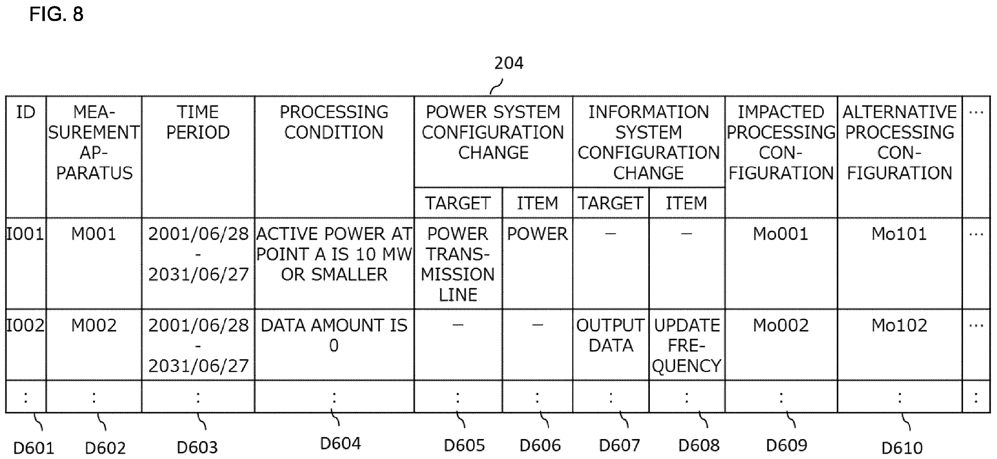

FIG. 8 is a drawing showing an example of the processing condition data 204. The processing condition data 204 includes information about a processing condition to be used for judging a modification of the protection control module 50 in an edge device 5. For example, the processing condition data 204 includes information related to items such as an ID (D601), a measurement apparatus D602, a time period D603, a processing condition D604, a target of a change in the power system configuration D605, an item thereof D606, a target of a change in the information system configuration D607, an item thereof D608, an impacted processing configuration D609, and an alternative processing configuration D610 and is recorded as processing condition data 204 for each item to be judged. The time period D603 indicates a time period in which a processing condition is present while details are the same and indicates that adding, modifying, deleting, or the like of the processing condition is scheduled. In accordance with occurrence of a phenomenon designated by D602 and D604, D605 and D606 indicate a change that occurs in the apparatus configuration in terms of the power system, whereas D607 and D608 indicate a change that occurs in the configuration in terms of the information system. Any of various items may serve as the target item of the processing condition D604, such as a measurement value range, a measurement data reception status, an operation status or a setting status of the apparatus, an execution status of the protection control module 50, or the like. Further, for example, it is also acceptable to designate not only a direct change in the measurement values but also an analytic change event, by designating, in the measurement apparatus D602, transient analysis data or load-flow calculation data as a detection target instead of a measurement tool and designating, in the processing condition D604, a reference level of reliability or safety as a detection method. The impacted processing configuration D609 includes information designating a protection control module having a possibility of being impacted by the change in the configuration indicated in D605 to D608. The alternative processing configuration D610 includes information designating a protection control module having a possibility of being able to substitute the protection control module indicated in D609. The above merely describes an example, and different items may be used as long as it is possible to use the items for judging a modification of the protection control modules.

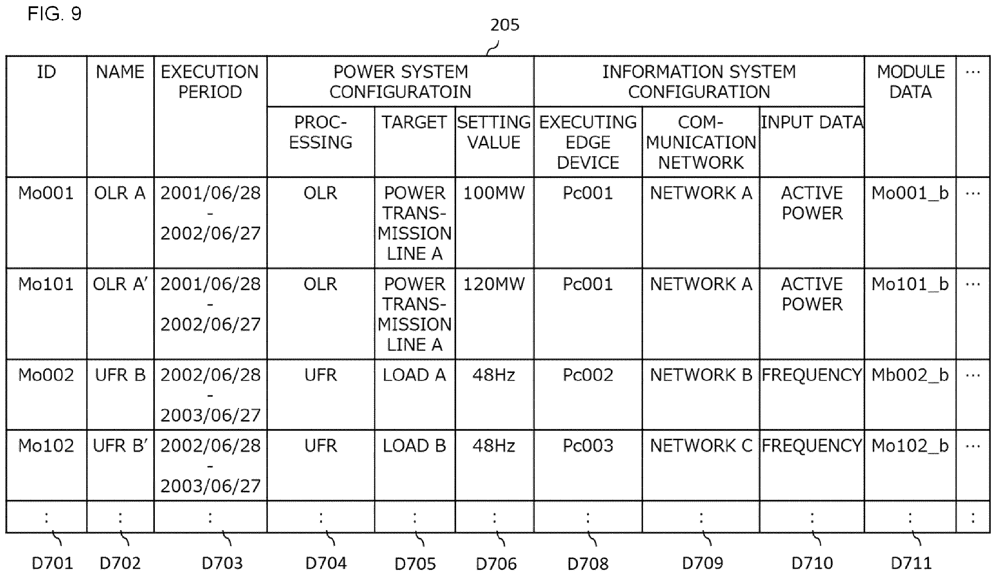

FIG. 9 is a drawing showing an example of the processing configuration data 205. The processing configuration data 205 includes information about the protection control module 50 executed by an edge device 5. For example, the processing configuration data 205 includes information related to items such as an ID (D701), a name D702, an execution period D703, a process of the power system configuration D704, a target D705, a setting value D706, an edge device to execute the information system configuration D708, a communication network D709, input data D710, and module data D711 and is recorded as processing configuration data 205 for each protection control module 50. The ID (D701) includes a management number for identifying the protection control module 50. The name D702 includes a simple expression indicating a processing outline or a characteristic of the protection control module 50. The execution period D703 includes information about a time period in which the protection control module 50 is executed in the edge device 5. In correspondence with the situation where the protection control module 50 is executed for the power grid EG, setting information in the configuration related to the power system (which hereinafter may be referred to as a "power system configuration") is included in D704 to D706, whereas setting information in the information system configuration is included in D708 to D710. For example, from D704 to D706, it is understood that, as the power system, the protection control module identified with the ID Mo001 provides an Over Load Relay (OLR) function for the specific power transmission line A of the power grid EG, with a setting value of 100 MW. Further, from D708 to D710, it is understood that, as the information system, the edge device 5 to execute the protection control module is assumed to be one identified with the ID Pc001, while the network A is used as a communication network, and active power is used as the input data. The above merely describes examples. The items indicating the information about the protection control module 50 may be added, modified, or deleted. Further, the module data D711 includes binary data of the protection control module 50 to be executed by the edge device 5. The execution period D703 may be determined based on a calculation by the evaluation device 1.

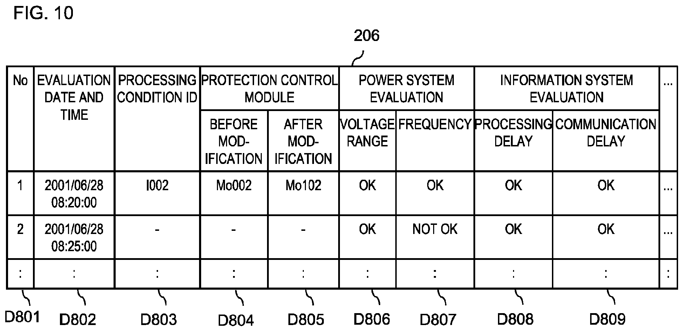

FIG. 10 is a drawing showing an example of the processing evaluation data 206. Regarding the power grid EG at a certain date/time during an evaluation period, the processing evaluation data 206 includes information about an evaluation as a power system (which hereinafter may be referred to as a "power system evaluation") and an evaluation as an information system (which hereinafter may be referred to as an "information system evaluation"). For example, the processing evaluation data 206 includes information such as a serial number D801, an evaluation date/time D802, a processing condition ID (D803), protection control modules 50 before the modification D804 and after the modification D805, a voltage range D806 and a frequency D807 serving as power system evaluations, and a processing delay D808 and a communication delay D809 serving as information system evaluations regarding the power grid EG, and is recorded as processing evaluation data 206 every time an evaluation is made at the time of modifying a protection control module 50 based on a processing condition or an evaluation is made on a regular basis. The evaluation date/time D802 includes a date/time for which the evaluation is executed. The processing condition ID (D803) includes the ID (D601) of the processing condition data 204 that serves as a basis for judging the modification of the protection control module 50. The protection control modules 50 before the modification D804 and after the modification D805 include the IDs of the protection control modules 50 before and after modifying the protection control module. Regarding the power grid EG, the voltage range D806 and the frequency D807 serving as the power system evaluations as well as the processing delay D808 and the communication delay D809 serving as the information system evaluations respectively include a result of evaluating the performance and the reliability as the power system and a result of evaluating the performance and the reliability as the information system, according to a flowchart (explained later). In a specific example, the information included in the processing evaluation data 206 may indicate that, with respect to the processing condition ID I002, if the protection control module 50 is altered from Mo002 before the modification to Mo102 after the modification, the voltage range and the frequency are OK (in the state of satisfying the conditions set in advance) in the power system evaluations, whereas the processing delay and the communication delay are OK in the information system evaluations, at the evaluation date/time of 08:20:20 on 2001/06/28. The above merely describes examples, and items may be added, modified, or deleted in accordance with evaluation standards of the power system and the information system.

### (Calculating and evaluating performance indices)

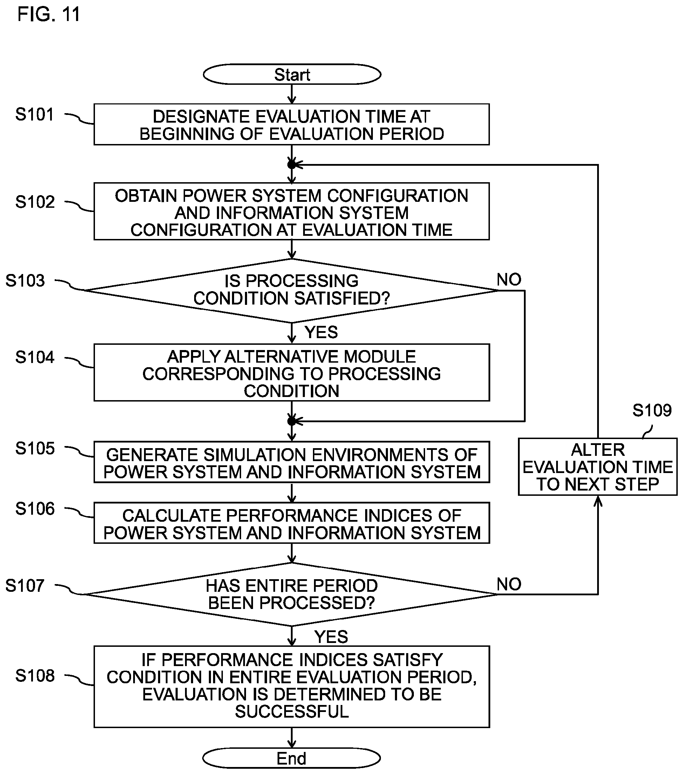

Next, calculating and evaluating performance indices will be explained, with reference to FIG. 11. FIG. 11 is a drawing showing an example of a flowchart for evaluating the information system configuration of the edge devices 5.

Regularly or as being triggered by a user instruction, the main processing unit 101 designates a time subject to an evaluation (which hereinafter may be referred to as an "evaluation time") at the beginning of a time period subject to the evaluation (which hereinafter may be referred to as an "evaluation period") (S101).

Subsequently, the processing condition determination unit 104 obtains a power system configuration and an information system configuration at the evaluation time. More specifically, the processing condition determination unit 104 obtains the grid state data 201, the grid apparatus configuration data 202, and the information system configuration data 203 at the evaluation time (S102).

After that, the processing condition determination unit 104 obtains the processing condition data 204 and determines whether or not the processing condition D604 is satisfied with respect to the data 201 to 203 at the evaluation time (S103). Further, if the processing condition D604 is satisfied (S103: Yes), the processing condition determination unit 104 applies the alternative protection control module corresponding to the processing condition. In other words, the processing condition determination unit 104 records the module modification corresponding to the processing condition D604 into the processing configuration data 205 (S104). More specifically, when a phenomenon designated by D602 to D604 in the processing condition data 204 has been determined, the protection control module indicated under the impacted processing configuration D609 is modified to be the protection control module indicated under the alternative processing configuration D610, and information about the post-modification protection control module is recorded into the processing configuration data 205.

Subsequently, the future grid generation unit 102 generates a simulation environment as a power system (which hereinafter may be referred to as a "power system simulation environment") for the power grid EG at the evaluation time, from the grid state data 201, the grid apparatus configuration data 202, and the processing configuration data 205. The future information system generation unit 103 generates a simulation environment as an information system (which hereinafter may be referred to as an "information system simulation environment") at the evaluation time, from the information system configuration data 203 and the processing configuration data 205 (S105).

After that, the power system evaluation unit 105 evaluates the power grid EG as a power system for adjusting a flow of the power. More specifically, by using the power system simulation environment generated at S105, the power system evaluation unit 105 calculates an evaluation of the performance as a power system regarding the processing evaluation data 206 at the evaluation time. Further, the information system evaluation unit 106 evaluates the power grid EG as an information system for performing information processing and communication. More specifically, by using the information system simulation environment generated at S105, the information system evaluation unit 106 calculates an evaluation of the performance as an information system regarding the processing evaluation data 206 at the evaluation time (S106).

Subsequently, the evaluation determination unit 107 calculates performance indices indicating the performance as a power system and the performance as an information system with respect to the evaluation period. More specifically, in order to determine whether or not all the processes in the evaluation period have been performed, the evaluation determination unit 107 determines whether or not the evaluation time is at the end of the evaluation period. If not at the end (S107: No), the evaluation time is moved to the next step (S109), and the processes at S102 and thereafter are repeatedly performed. If the evaluation time is at the end (S107: Yes), the evaluation determination unit 107 obtains the processing evaluation data 206. When the evaluation as the power system (which hereinafter may be referred to as a "power system evaluation") and the evaluation as the information system (which hereinafter may be referred to as an "information system evaluation") both satisfy standards determined in advance (if the conditions are satisfied) at all the evaluation times, the evaluation is determined to be successful (S108).

### (Functions of the processing units in the flowchart of FIG. 11)

By repeating the processing condition determination at step S103 over the evaluation period, the processing condition determination unit 104 formulates a plan for utilizing the power grid EG and utilizing the processing modules (the protection control modules) on the basis of a prediction about changes in the power grid EG during the evaluation period. In this situation, "formulating a plan" denotes updating the processing configuration data 205 so as to include the protection control module modified on the basis of the processing condition determination and modifying the power grid EG in association with the modification of the processing configuration data 205. In this situation, modifying the power grid EG denotes, for example, a modification associated with the substituted protection control module in the data 201 and 203.

Thus, by "formulating the plan", the processing condition determination unit 104 is also capable of setting how the protection control modules are to be used in the future.

When it is determined at step S103 whether or not the processing condition is satisfied, it is acceptable, on the basis of the data 201 to 203 at the evaluation time, to generate a power system simulation environment via the future grid generation unit 102 and to generate an information system simulation environment via the future information system generation unit 103 so as to further make determination, on the basis of the generated simulation environments.

For example, the power system simulation environment generated by the future grid generation unit 102 at step S105 for simulating the characteristics pertinent to the electric circuitry may be generated, for example, by generating an electric circuit by integrating together the apparatuses listed in the grid apparatus configuration data 202 with respect to the designated evaluation time; adding a power generation amount, a load amount, setting statuses, operation statuses, and the like of the apparatuses that are extracted from the grid state data 201; and adding protection and control operations from the apparatus configurations of the protection control modules in the execution period of the processing configuration data 205. With respect to a power system model included in such a power system simulation environment, it is possible to simulate a power load-flow characteristic in the electric circuit, by performing a load-flow calculation, for example. Further, by constructing a model capable of simulating more advanced characteristics, by having a transient analysis or an impact of an accident reflected on the electric circuit, for example, it is possible to add an evaluation index having a higher level of precision. In addition, using an item corresponding to a change in the power system configuration may make it possible to simulate the state of a measurement value of a measurement apparatus used for determining the processing condition.

Furthermore, the information system simulation environment generated by the future information system generation unit 103 at step S105 for simulating the characteristics pertinent to the information system may be generated, for example, by integrating together the apparatuses listed in the information system configuration data 203; generating an information system model in which the measurement apparatuses 601, the electric apparatuses 602, and the edge devices 5 are connected together via the second communication network 4; adding setting statuses, operation statuses, and the like of the apparatuses that are extracted from the grid state data 201; and adding the protection control modules during the execution period of the processing configuration data 205, while in the state of being executed in the corresponding edge devices 5. Because a plurality of information system environments are expected to be dispersed among the substations and the like in the power grid EG, it is also acceptable to generate a plurality of information system simulation environments. The information system model may be constructed by using virtualization technology and employing a virtual network or a virtual machine, in such a manner that it is possible to simulate an actual processing execution. Alternatively, characteristics may be simulated in the form of a communication amount of an individual element or a total sum of computation amounts, in accordance with the items or a precision level of the evaluation. In addition, using an item corresponding to a change in the information system configuration may make it possible to simulate the state of a measurement apparatus used for determining the processing condition.

At step S106, the power system evaluation unit 105 performs a load-flow calculation and a transient calculation by using the power system model generated at step S105 and calculates characteristic values, in accordance with the items regarding the power system evaluation in the processing evaluation data 206. For example, to evaluate whether the voltage of a busbar is not deviating from a prescribed range, a load-flow state of the power system model may be simulated through a load-flow calculation, so as to calculate a voltage value of each busbar as a characteristic value and, if the voltage values of all the busbars are within the voltage range, an evaluation "OK" shall be given. As for details of the evaluation above, instead of judging satisfaction as to whether the condition set in advance is satisfied (OK) or not satisfied (not OK), it is also acceptable to record a quantitative index such as the quantity of sections having a deviation. The above merely describes an example, and evaluation items may be added, modified, or deleted, depending on the performance or a level of reliability to be achieved.

By using the information system model generated at step S105, the information system evaluation unit 106 simulatively brings the protection control modules 50 and the connected electric devices 6 into operation and calculates characteristic values, in accordance with the items regarding the information system evaluation in the processing evaluation data 206. For example, to evaluate whether the calculation period of a protection control module 50 is within a default delay period, a simulation environment may be made to match the computation capability of the edge device 5 corresponding to the protection control module 50, so as to simulate a calculation process from inputting, processing, and up to outputting and to calculate the time until a process completion as a characteristic value. If the calculated time is within the delay period, an evaluation "OK" shall be given. As for details of the evaluation above, instead of judging satisfaction as to whether the condition set in advance is satisfied (OK) or not satisfied (not OK), it is also acceptable to record a quantitative index such as a total sum of deviation amounts from the delay period. The above merely describes an example, and evaluation items may be added, modified, or deleted, depending on the performance or a level of reliability to be achieved.

At step S108, by using the evaluation values (the performance indices) generated at step S106, the evaluation determination unit 107 evaluates whether the information system configuration recorded in the information system configuration data 203 has a sufficient performance level. For example, with regard to the processing evaluation data 206, when "OK" is given to all the power system evaluations and the information system evaluations, it is acceptable to judge that a sufficient performance level is achieved. Alternatively, when the items are each a quantitative value, the method for determining "OK" may be based on other combinations using the evaluation values. For example, for an item regarding power transmission loss, determination may be made by using an average value of the entire evaluation period or determination may be made by using an upper limit for a time period during which a voltage deviation continues. Further, it is also acceptable to set weights with quantitative values, so as to make an evaluation on values combining the results thereof.

When performance indices have been calculated in correspondence with the situation where the evaluation determination unit 107 applies the plan for the evaluation period, the configuration evaluation unit 109 sets an information system configuration of which the performance indices during the evaluation period satisfy a performance requirement, as a system proposal capable of executing the plan.

Further, it is also acceptable to make an evaluation on a plurality of scenarios, by further adding scenario IDs regarding the times, the time periods, and the execution periods, with respect to one or more data among the grid state data 201, the grid apparatus configuration data 202, the information system configuration data 203, the processing condition data 204, the processing configuration data 205, and the processing evaluation data 206. For the process in the flowchart of FIG. 11, it is possible to realize evaluations in a plurality of scenarios, by newly starting a process on another scenario, after the evaluation period of one scenario is finished.

As for the scenarios, for example, by generating a plurality of data having mutually-different scenario IDs and mutually-different parameters while corresponding to mutually the same time period with respect to a specific apparatus in the grid apparatus configuration data 202, it is possible to express statuses of mutually-different grid apparatus configurations corresponding to the mutually-different scenarios. In another example, by similarly modifying the items included in the data 201 to 205, it is possible to obtain data taking scenarios into consideration. In this manner, the power grid EG that has virtually been modified is generated, and the plurality of scenarios are generated.

When the processes indicated in the flowchart of calculating and evaluating the performance indices are performed as described above, for example, generated as the data 201 to 206 may be: a future prediction about a change in the power grid EG taking into consideration a change in an external environment such as weather; and a long-term prediction including a resource prediction for the information system such as a computation resource amount usable by the edge devices 5. Subsequently, a plan is formulated for the processing module of the edge devices 5 and the like and for the power system to address the change that may occur in the long-term prediction, and the performance indices for both the power system and the information system are calculated by using the simulation environments, and a verification process is performed to see whether a prescribed requirement is satisfied. By performing the prediction, planning, and verification processes in this manner, it is possible to verify whether or not the information system configuration of the edge devices and the like has a sufficient performance level that withstands long-term status changes. It is therefore possible to evaluate whether or not the information system configuration is appropriate.

### (Evaluating a modification proposal)

After the information system configuration satisfying the performance indices has been discovered, there is a possibility that, for example, an evaluation may be necessary for another requirement such as a cost. To cope with the above, an example will be explained in which, while using the information system configuration set as the system proposal capable of executing the plan as a basic system configuration, a plurality of information system configurations obtained by adding a modification such as increasing or decreasing the edge devices are generated as modification proposals, so that a verification process is performed with respect to each of the configurations.

### (Specific examples of the data)

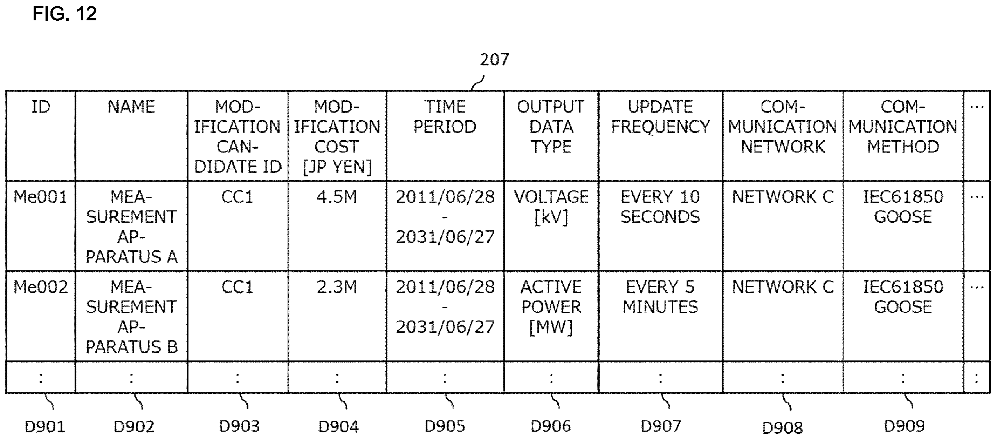

FIG. 12 is a drawing showing an example of the information system modification candidate data 207. The information system modification candidate data 207 is data set in advance by a user of the control system 1A or the like, for example, and may include data of a future period (a time period including a future time) to be evaluated by the evaluation device 1. For example, the information system modification candidate data 207 may include candidate information for configuration modifications during the future period, with respect to information related to information system aspects of the edge devices 5 that execute the protection control modules 50 and the electric devices 6 structuring the power grid EG. FIG. 12 shows an example of the information system modification candidate data 207 corresponding to an example of a measurement apparatus 601. For example, the information system modification candidate data 207 includes information related to items such as an ID (D901), a name D902, a modification candidate ID (D903), a modification cost D904, a time period D905, an output data type D906, update frequency D907, a communication network D908, and a communication method D909 and is recorded as information system modification candidate data 207 with respect to the measurement apparatus 601. The modification candidate ID (D903) denotes an ID identifying a modification that is applied collectively. The modification cost D904 denotes an expense required by the modification. The time period D905 denotes a time period to which the modification is to be applied. The information system modification candidate data 207 includes information necessary for an analysis pertinent to the information system of the power grid EG and includes: a measurement item and communication-related information such as the type and the frequency of communication data, a communication connection destination, and a communication capacity of the measurement apparatus 601; a processing item and communication-related information such as the type and the frequency of communication data, a communication connection destination, and a communication capacity of the electric apparatus 602; and information related to the information system configuration such as a computation capability, a storage capacity, and a communication capacity of the edge device 5. In a specific example, the information included in the information system modification candidate data 207 may indicate that, with respect to the measurement apparatus A having the ID Me001, the modification candidate ID is CC1; the modification cost is 4.5 M Japanese Yen; the time period is from 2011/06/28 to 2031/06/27, the output data type is voltage [kV]; the update frequency is every 10 seconds; the communication network is the network C; and the communication method is IEC 61850, GOOSE. FIG. 12 shows an example of the measurement apparatus 601 being electric; however, for other types of measurement apparatus 601 or the electric apparatuses 602, different items may be provided.

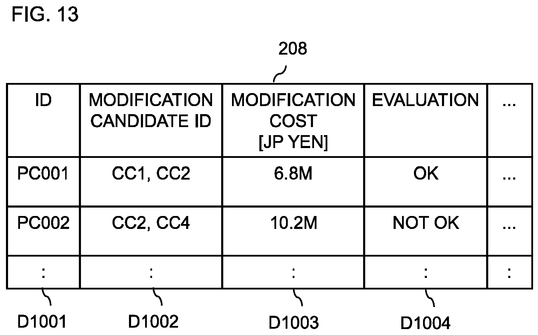

FIG. 13 is a drawing showing an example of the information system modification proposal data 208. The information system modification proposal data 208 includes a modification proposal for the information system configuration generated by using a combination of the information system modification candidate data 207. For example, the information system modification proposal data 208 includes information related to items such as an ID (D1001), a modification candidate ID (D1002), a modification cost D1003, and an evaluation D1004 and is recorded as information system modification proposal data 208 for each modification proposal. The ID (D1001) denotes an identifier for distinguishing each modification proposal. The modification candidate ID (D1002) denotes a set of modification candidate IDs included in the modification proposal. The modification cost D1003 denotes a cost that will incur when all the modification candidates included in the modification proposal are applied. Further, the evaluation D1004 records an evaluation value determined by the evaluation determination unit 107 throughout the evaluation period regarding the information system configuration to which the modification proposal is applied. The modification cost is an example of an item used by the configuration evaluation unit 109 for determining (a degree of) excellence of the configuration. Besides the modification cost, an item may be used to express excellence of a certain aspect of the configuration, such as a load addition value of a plurality of reliability indices for a power outage period or another type of cost item such as a maintenance cost.

### (A process to evaluate the modification proposals)

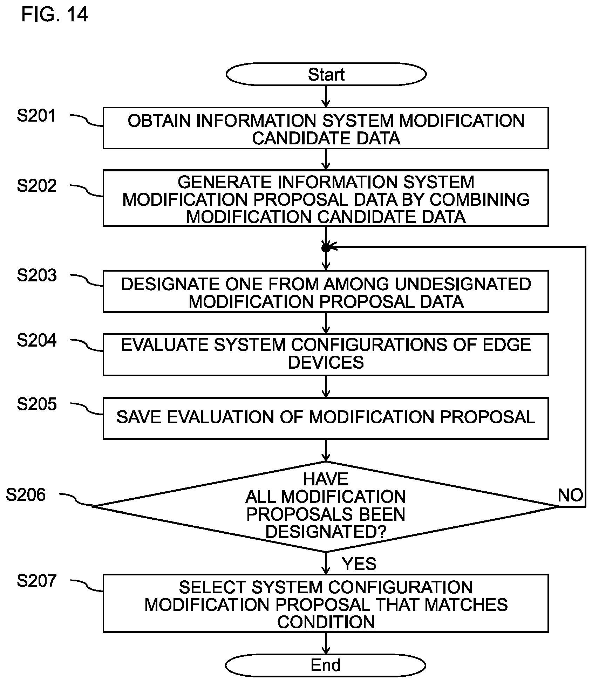

FIG. 14 shows an example of a flowchart for generating and evaluating an information system configuration.

The information system modification proposal generation unit 108 generates a plurality of modification proposals each indicating an information system configuration obtained by adding a modification to the system proposal. More specifically, the information system modification proposal generation unit 108 obtains the information system modification candidate data 207 (S201) and generates the information system modification proposal data 208 by combining the modification candidates for the information system configuration (S202). Subsequently, the evaluation determination unit 107 designates one modification proposal from among the information system modification proposal data 208 (S203) and further evaluates the information system configuration to which the designated modification proposal is applied by performing the processes described in the flowchart shown in FIG. 11 (S204), and saves an evaluation result into the information system modification proposal data 208 (S205). When all the modification proposals have not been designated (S206: No), the process returns to S203 and the processes are performed until all the modification proposals have been designated (S206: Yes).

After that, from among the generated plurality of modification proposals, the configuration evaluation unit 109 selects a modification proposal of which the performance index during the evaluation period satisfies the necessary requirement and is the best. More specifically, from among the proposals of which the evaluation D1004 is indicated as "OK" in the information system modification proposal data 208, the configuration evaluation unit 109 selects a modification proposal determined to match a prescribed condition (S207).

The information system simulation environment generated by the future information system generation unit 103 at step S204 for simulating characteristics pertinent to the information system is generated similarly to S105, after applying the modification proposal designated from the information system modification proposal data 208 to the information system configuration data 203, for example. When the information system modification proposal data 208 is applied to the information system configuration data 203, for example, if IDs or the names match between the information system modification proposal data 208 and the information system configuration data 203, the data for that time period is overwritten with the information system modification proposal data 208.

When generating the information system modification proposal data 208 at step S202, for example, the information system modification proposal generation unit 108 may generate a plurality of modification proposals as all the combinations of the modification candidates free from contradictions or as all the combinations meeting a constraint such as satisfying the condition of a cost upper limit. In an example, the information system modification proposal generation unit 108 may generate a plurality of modification proposals each representing an information system configuration which is obtained by adding a modification to the system proposal and which has an expense equal to or lower than a certain level.

For example, at the time of making a selection at step S207, the configuration evaluation unit 109 determines and selects a proposal by comparing evaluation determination items represented by the modification cost D1003, from among the proposals of which all the evaluations D1004 are indicated as "OK" in the information system modification proposal data 208 (from among the information system configurations of which the performance index satisfies the performance requirement). Examples of the determination process include selecting (extracting) a system modification proposal having the lowest modification cost (construction cost); and selecting a modification proposal having the highest reliability (a modification proposal having the greatest reliability evaluation).

In this situation, the information system modification proposal generation unit 108 may formulate modification proposals for the information system configuration of the power grid EG with respect to a plurality of scenarios. The configuration evaluation unit 109 may make evaluations of the information system configuration based on the plurality of scenarios.

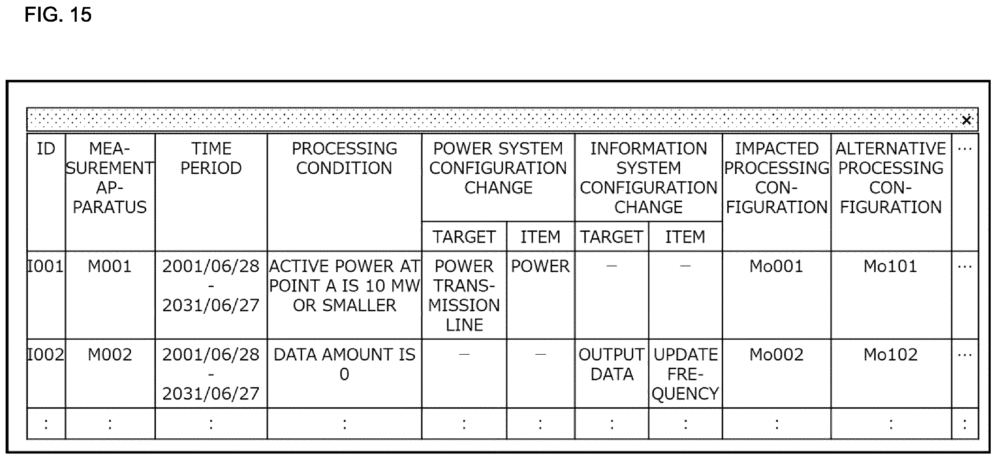

Next, a display screen displayed on the display unit 33 of the evaluation device 1 will be explained, with reference to FIG. 15 to FIG. 19. The display screen (explained later) is displayed on the display unit 33 as a result of, for example, the user selecting, via the input unit 32, selection buttons displayed in a list format or from a thumbnail screen on a menu screen displayed on the display unit 33.

FIG. 15 is a drawing showing an example of a display screen for the processing conditions.

The display screen for the processing conditions is invoked from the menu screen and displays details of the processing condition data 204. Because the details of the processing condition data 204 displayed on the display screen for the processing conditions are the same as those explained with reference to FIG. 8, detailed explanations thereof will be omitted. Further, the display screen for the processing conditions may display a part of the processing condition data 204 or may display together certain data that is not included in the processing condition data 204. The display screen for the processing conditions may include a "MODIFY" button used by the user for modifying a part of the processing condition data 204 or a "RETURN" button used for closing the screen and returning to the menu screen from which the display screen was invoked.

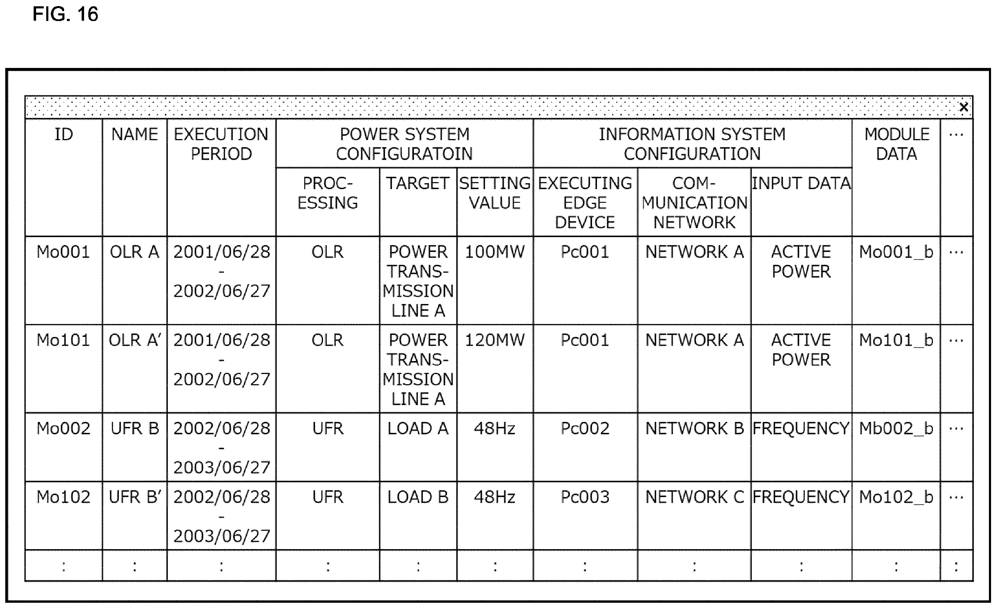

FIG. 16 is a drawing showing an example of a display screen for the processing configurations.

The display screen for the processing configurations is invoked from the menu screen and displays details of the processing configuration data 205. Because the details of the processing configuration data 205 displayed on the display screen for the processing configurations are the same as those explained with reference to FIG. 9, detailed explanations thereof will be omitted. Further, the display screen for the processing configurations may display a part of the processing configuration data 205 or may display together certain data that is not included in the processing configuration data 205. The display screen for the processing configurations may include a "MODIFY" button used by the user for modifying a part of the processing configuration data 205 or a "RETURN" button used for closing the screen and returning to the menu screen from which the display screen was invoked.

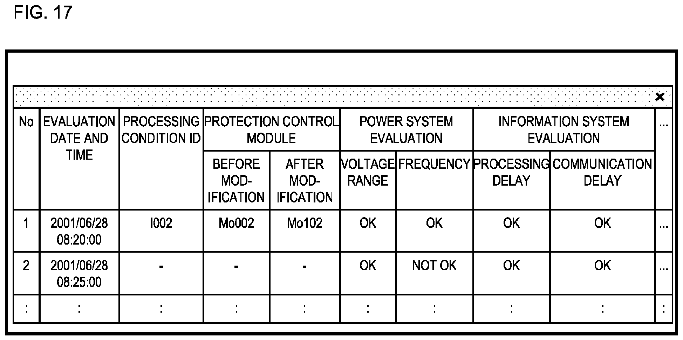

FIG. 17 is a drawing showing an example of a display screen for the processing evaluations.

The display screen for the processing evaluations is invoked from the menu screen and displays details of the processing evaluation data 206. Because the details of the processing evaluation data 206 displayed on the display screen for the processing evaluations are the same as those explained with reference to FIG. 10, detailed explanations thereof will be omitted. Further, the display screen for the processing evaluations may display a part of the processing evaluation data 206 or may display together certain data that is not included in the processing evaluation data 206.

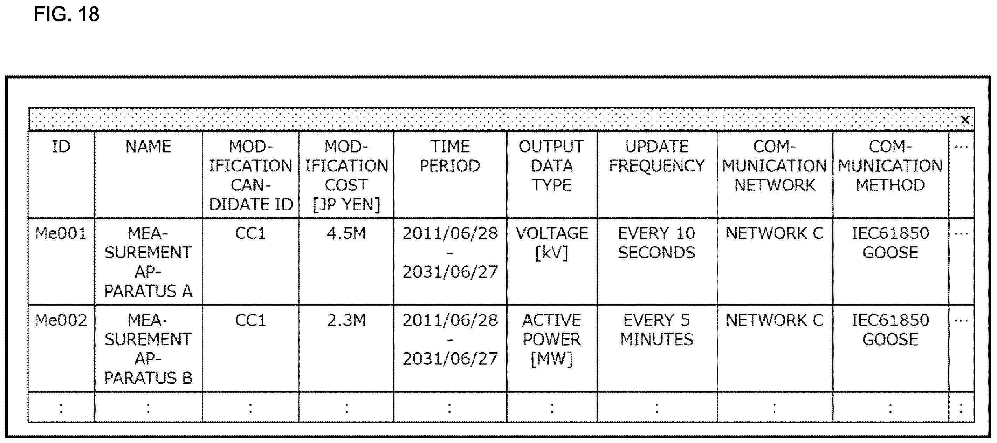

FIG. 18 is a drawing showing an example of a display screen for the information system modification candidates.

The display screen for the information system modification candidates is invoked from the menu screen and displays details of the information system modification candidate data 207. Because the details of the information system modification candidate data 207 displayed on the display screen for the information system modification candidates are the same as those explained with reference to FIG. 12, detailed explanations thereof will be omitted. Further, the display screen for the information system modification candidates may display a part of the information system modification candidate data 207 or may display together certain data that is not included in the information system modification candidate data 207. The display screen for the information system modification candidates may include a "MODIFY" button used by the user for modifying a part of the information system modification candidate data 207 or a "RETURN" button used for closing the screen and returning to the menu screen from which the display screen was invoked.

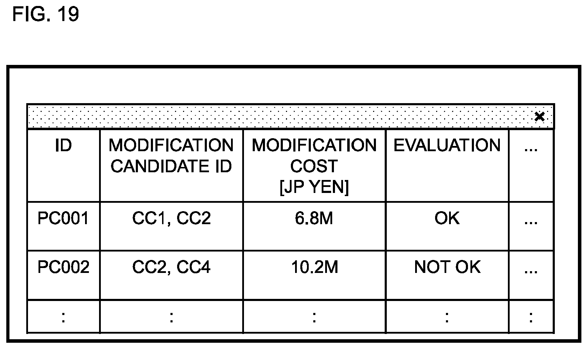

FIG. 19 is a drawing showing an example of a display screen for the information system modification proposals.

The display screen for the information system modification proposals is invoked from the menu screen and displays details of the information system modification proposal data 208. Because the details of the information system modification proposal data 208 displayed on the display screen for the information system modification proposals are the same as those explained with reference to FIG. 13, detailed explanations thereof will be omitted. Further, the display screen for the information system modification proposals may display a part of the information system modification proposal data 208, may display together a part of the information system modification candidate data 207, or may display together certain data that is not included in the information system modification proposal data 208.

### (Operations and advantageous effects)

As described above, according to the present invention, it is possible to verify whether the configuration of the information system of the edge devices 5 and the like has a sufficient performance level that withstands long-term and diversified status changes in the power grid and to generate the plan for the information system configuration capable of maintaining reliability. Further, it is possible to evaluate whether or not the current information system configuration is capable of maintaining reliability in the long term and to notify the user of the evaluation. Furthermore, by formulating the plan for the information system configuration that is necessary and sufficient, it is possible to prevent excessive investments and to achieve a cost reduction in the construction of the information system. In addition, according to the present invention, it is possible to construct and provide, at a suitable time, a protection program that addresses changes inside and outside the power grid and that guarantees the reliability in both aspects of the system and the power.

Certain embodiments of the present invention have thus been explained; however, the present invention is not limited to the embodiments described above. It is possible to apply various types of modifications without departing from the gist of the present invention.

The following will describe certain aspects that may serve as details of the present invention; however, the present disclosure is not limited by these examples.

### (Aspect 1)

An evaluation device for evaluating a power grid facility being a facility included in a power grid, the evaluation device including:
a processor;
a memory; and
a recording unit that stores therein at least grid state data, wherein
the power grid includes an electric device and an edge device which controls the electric device and has a processing module that is modifiable,
the evaluation device is connectable to the edge device, and
the memory includes a processing instruction that causes the processor to run as:
   a power system evaluation unit that evaluates the power grid as a power system for adjusting a flow of electric power;
   an information system evaluation unit that evaluates the power grid as an information system for performing information processing and communication;
   a processing condition determination unit that formulates a plan for utilizing the power grid and utilizing the processing module, on a basis of a prediction about a change in the power grid during an evaluation period;
   an evaluation determination unit that calculates a performance index indicating a performance as the power system and a performance as the information system corresponding to a situation where the plan for the evaluation period is applied; and
   a configuration evaluation unit that sets an information system configuration of which the performance index during the evaluation period satisfies a performance requirement, as a system proposal capable of executing the plan.

### (Aspect 2)

The evaluation device according to aspect 1, wherein
the memory further includes a processing instruction that causes the processor to run as an information system modification proposal generation unit that generates a plurality of modification proposals each representing an information system configuration obtained by adding a modification to the system proposal, and
the configuration evaluation unit performs a process of extracting, from the generated plurality of modification proposals, an information system configuration of which the performance index satisfies the performance requirement and which has a lowest construction cost.

### (Aspect 3)

The evaluation device according to aspect 1 or 2, wherein
the memory further includes a processing instruction that causes the processor to run as an information system modification proposal generation unit that generates a plurality of modification proposals each representing an information system configuration that is obtained by adding a modification to the system proposal and has an expense equal to or lower than a certain level, and
the configuration evaluation unit performs a process of extracting, from the generated plurality of modification proposals of which the performance index satisfies the performance requirement, an information system configuration having a greatest reliability evaluation.

### (Aspect 4)

The evaluation device according to any one of aspects 1 to 3, wherein
the memory further includes a processing instruction that causes the processor to run as an information system modification proposal generation unit that generates a plurality of modification proposals each representing an information system configuration obtained by adding a modification to the system proposal, as all combinations of modification candidates free from contradictions.

### (Aspect 5)

The evaluation device according to any one of aspects 1 to 4, wherein
the plan is formulated with respect to a plurality of scenarios, and
the configuration evaluation unit evaluates information system configurations based on the plurality of scenarios.

### (Aspect 6)

An evaluation method implemented by an evaluation device for evaluating a power grid facility being a facility included in a power grid, wherein
the evaluation device includes
a processor,
a memory, and
a recording unit that stores therein at least grid state data,
the power grid includes an electric device and an edge device which controls the electric device and has a processing module that is modifiable,
the evaluation device is connectable to the edge device, and
by using a processing instruction recorded in the memory, the evaluation method causes the processor to execute:
   evaluating the power grid as a power system for adjusting a flow of electric power;
   evaluating the power grid as an information system for performing information processing and communication;
   formulating a plan for utilizing the power grid and utilizing the processing module, on a basis of a prediction about a change in the power grid during an evaluation period;
   calculating a performance index indicating a performance as the power system and a performance as the information system corresponding to a situation where the plan for the evaluation period is applied; and
   setting an information system configuration of which the performance index during the evaluation period satisfies a performance requirement, as a system proposal capable of executing the plan.

### Reference Signs List

1 evaluation device
1A control system
2 control device
3 first communication network
4 second communication network
5, 5n edge device
5A edge device group
6, 6n electric device
6A electric device group
10 processing unit
20 recording unit
31 communication unit
32 input unit
33 display unit
50, 50n protection control module
101 main processing unit
102 future grid generation unit
103 future information system generation unit
104 processing condition determination unit
105 power system evaluation unit
106 information system evaluation unit
107 evaluation determination unit
108 information system modification proposal generation unit
109 configuration evaluation unit
201 grid state data
202 grid apparatus configuration data
203 information system configuration data
204 processing condition data
205 processing configuration data
206 processing evaluation data
207 information system modification candidate data
208 information system modification proposal data
211 environment state data
212 apparatus setting data
213 apparatus state data
501, 501n management unit
502, 502n communication unit
551, 551n module processing unit
552, 552n module recording unit
553, 553n module communication unit
601, 601n measurement apparatus
602, 602n electric apparatus

## Claims

1. An evaluation device for evaluating a power grid facility being a facility included in a power grid, the evaluation device comprising:
a processor;
a memory; and
a recording unit that stores therein at least grid state data, wherein
the power grid includes an electric device and an edge device which controls the electric device and has a processing module that is modifiable,
the evaluation device is connectable to the edge device, and
the memory includes a processing instruction that causes the processor to run as:
a power system evaluation unit that evaluates the power grid as a power system for adjusting a flow of electric power;
an information system evaluation unit that evaluates the power grid as an information system for performing information processing and communication;
a processing condition determination unit that formulates a plan for utilizing the power grid and utilizing the processing module, on a basis of a prediction about a change in the power grid during an evaluation period;
an evaluation determination unit that calculates a performance index indicating a performance as the power system and a performance as the information system corresponding to a situation where the plan for the evaluation period is applied; and
a configuration evaluation unit that sets an information system configuration of which the performance index during the evaluation period satisfies a performance requirement, as a system proposal capable of executing the plan.

2. The evaluation device according to claim 1, wherein
the memory further includes a processing instruction that causes the processor to run as an information system modification proposal generation unit that generates a plurality of modification proposals each representing an information system configuration obtained by adding a modification to the system proposal, and
the configuration evaluation unit performs a process of extracting, from the generated plurality of modification proposals, an information system configuration of which the performance index satisfies the performance requirement and which has a lowest construction cost.

3. The evaluation device according to claim 1, wherein
the memory further includes a processing instruction that causes the processor to run as an information system modification proposal generation unit that generates a plurality of modification proposals each representing an information system configuration that is obtained by adding a modification to the system proposal and has an expense equal to or lower than a certain level, and
the configuration evaluation unit performs a process of extracting, from the generated plurality of modification proposals of which the performance index satisfies the performance requirement, an information system configuration having a greatest reliability evaluation.

4. The evaluation device according to claim 1, wherein
the memory further includes a processing instruction that causes the processor to run as an information system modification proposal generation unit that generates a plurality of modification proposals each representing an information system configuration obtained by adding a modification to the system proposal, as all combinations of modification candidates free from contradictions.

5. The evaluation device according to claim 1, wherein
the plan is formulated with respect to a plurality of scenarios, and
the configuration evaluation unit evaluates information system configurations based on the plurality of scenarios.

6. An evaluation method implemented by an evaluation device for evaluating a power grid facility being a facility included in a power grid, wherein
the evaluation device comprises
a processor,
a memory, and
a recording unit that stores therein at least grid state data,
the power grid includes an electric device and an edge device which controls the electric device and has a processing module that is modifiable,
the evaluation device is connectable to the edge device, and
by using a processing instruction recorded in the memory, the evaluation method causes the processor to execute:
evaluating the power grid as a power system for adjusting a flow of electric power;
evaluating the power grid as an information system for performing information processing and communication;
formulating a plan for utilizing the power grid and utilizing the processing module, on a basis of a prediction about a change in the power grid during an evaluation period;
calculating a performance index indicating a performance as the power system and a performance as the information system corresponding to a situation where the plan for the evaluation period is applied; and
setting an information system configuration of which the performance index during the evaluation period satisfies a performance requirement, as a system proposal capable of executing the plan.
